# EUROPEAN PATENT APPLICATION

(11) **EP 2 818 909 A1**
(43) Date of publication of application: **31.12.2014**
(21) Application number: 13751814.8
(22) Date of filing: 11.01.2013
(51) Int. Cl.: G02B 26/10, H04N 5/74

(54) **IMAGE DISPLAY DEVICE AND MIRROR DRIVE METHOD THEREFOR**

(30) Priority: 22.02.2012 JP 2012036012
(71) Applicant: Funai Electric Co., Ltd., Daito-shi Osaka 574-0013 (JP)
(72) Inventor: CHIKAOKA, Atsuhiko, Daito-shi Osaka 574-0013 (JP)
(74) Representative: Grünecker, Kinkeldey, Stockmair & Schwanhäusser
(86) International application number: PCT/JP2013/050458
(87) International publication number: WO 2013/125256

(57) **Abstract**

An image display device (1) includes a phase control synthesis portion (8) shifting phases of a plurality of drive waveform signals to offset harmonic components thereof and synthesizing the plurality of drive waveform signals and a mirror drive portion (7) driving a mirror (6b) with a drive waveform signal synthesized by the phase control synthesis portion.

## Description

### Technical Field

The present invention relates to an image display device displaying an image by driving (displacing for scanning) a mirror reflecting light and a mirror driving method therefor, and more particularly, it relates to technology to prevent deterioration of an image by suppressing unnecessary vibration of a mirror.

### Background Art

In National Patent Publication Gazette No. 2008-547055, there is disclosed an apparatus for reducing image distortion in a projected image, including a pair of scan mirrors, a drive assembly for oscillating the scan mirrors about mutually orthogonal axes to form a raster pattern of scan lines on a projection surface, and means for adjusting a resonant frequency to be non-harmonically related to a drive frequency to reduce electrical interference between the resonant and drive frequencies and to resist image distortion. The drive assembly of this apparatus for reducing image distortion includes a drive operable at a prescribed drive frequency for moving one of the scan mirrors in one circumferential direction about one of the axes at a substantially constant drive speed. The scan mirror is configured to be returnable at the resonant frequency in an opposite circumferential direction about the axis at a return speed greater than the drive speed.

In Japanese Patent Laying-Open No. 2010-237535, there is disclosed an image display device including a drive processing portion changing the amplitude of a drive signal to output the drive signal from a drive signal generation portion and changing the oscillation amplitude of a reflective mirror, a ringing detecting portion detecting the amplitude of ringing generated by the inherent resonance of a light scanning element when the drive processing portion oscillates the reflective mirror while changing the amplitude thereof, and a filter characteristic adjusting portion adjusting the center frequency of an attenuation region in a notch filter according to the amplitude of ringing detected by the ringing detecting portion.

### Prior Art

### Patent Document

Patent Document 1: National Patent Publication Gazette No. 2008-547055
Patent Document 2: Japanese Patent Laying-Open No. 2010-237535

### Summary of the Invention

### Problem to be Solved by the Invention

The image display device according to the present invention is put into practical use as a laser projector projecting and displaying an image by reflecting a laser beam with a mirror displaced for scanning and scanning reflected light on a projection surface, for example, and in this image display device, the improvement of the quality of a displayed image is required. In this image display device, the mirror is driven by a drive waveform signal to be displaced for scanning. As to vertical scanning, for example, the mirror is displaced for scanning with a saw-tooth drive waveform signal corresponding to single vertical scanning, and an image of one frame is projected and displayed. In the case where the mirror does not accurately perform vertical scanning, therefore, a blocky projection image is formed, and the image quality is deteriorated.

The present invention has been made in light of the above circumstances in the related art, and an object of the present invention is to provide a function generation circuit capable of evaluating the temperature characteristics of the function generation circuit at a prescribed temperature and a method for adjusting the temperature characteristics of the function generation circuit.

### Means for Solving the Problem

Various reasons are known as a reason why the mirror cannot accurately perform vertical scanning, but the present inventor has newly focused on that a harmonic component of a drive waveform signal driving (displacing for scanning) the mirror influences the behavior of the mirror, whereby unnecessary vibration is generated in the mirror, and the scan accuracy of the mirror is deteriorated.

The present invention has been made on the basis of the aforementioned viewpoint, and an image display device according to a first aspect of the present invention is an image display device scanning light while reflecting the light by driving a mirror to display an image, including a phase control synthesis portion shifting the phases of a plurality of drive waveform signals to offset harmonic components thereof and synthesizing the plurality of drive waveform signals and a mirror drive portion driving the mirror with a drive waveform signal synthesized by the phase control synthesis portion.

In the image display device according to the first aspect of the present invention, as hereinabove described, the plurality of drive waveform signals are shifted in phase to offset the harmonic components thereof and are synthesized, whereby a harmonic component generating unnecessary vibration in the mirror is reduced or vanished, and the scan accuracy of the mirror can be improved.

In the aforementioned image display device according to the first aspect, the phase control synthesis portion is preferably configured to shift the phases of a first drive waveform signal and a second drive waveform signal by a range from 1/(2gm) to 1/(2gn) when setting a frequency lower by a prescribed level than the resonant frequency of the mirror to gn and setting a frequency higher by a prescribed level than the resonant frequency of the mirror to gm. According to this structure, the phases of the plurality of drive waveform signals can be shifted by the phase range (from 1/(2gm) to 1/(2gn)) at a frequency in a prescribed range (from gn to gm) with respect to the resonant frequency of the mirror, and hence a practical effect of offsetting the harmonic components can be obtained when the first drive waveform signal and the second drive waveform signal are synthesized.

In this case, the phase control synthesis portion is preferably provided at a plurality of stages corresponding to a plurality of resonant frequencies of the mirror, a first-stage phase control synthesis portion preferably shifts the phases of a first-stage first drive waveform signal and a first-stage second drive waveform signal by a range from 1/(2gm1) to 1/(2gn1) and synthesizes the first-stage first drive waveform signal and the first-stage second drive waveform signal when setting a frequency lower by a prescribed level than a first resonant frequency of the mirror to gn1 and setting a frequency higher by a prescribed level than the first resonant frequency to gm1, a second-stage phase control synthesis portion preferably branches a drive waveform signal synthesized by the first-stage phase control synthesis portion, shifts the phases of a second-stage first drive waveform signal and a second-stage second drive waveform signal by a range from 1/(2gm2) to 1/(2gn2), and synthesizes the second-stage first drive waveform signal and the second-stage second drive waveform signal when setting a frequency lower by a prescribed level than a second resonant frequency of the mirror to gn2 and setting a frequency higher by a prescribed level than the second resonant frequency to gm2, and the mirror drive portion is preferably configured to drive the mirror with a drive waveform signal synthesized by the second-stage phase control synthesis portion. According to this structure, even in the case where the mirror has the plurality of resonant frequencies due to the structure, the material, or the like, the phase control synthesis portions at the plurality of stages corresponding to the resonant frequencies of the mirror shift the phases of the plurality of drive waveform signals to offset the harmonic components thereof and synthesize the plurality of drive waveform signals, whereby the harmonic component generating unnecessary vibration in the mirror is reduced or vanished, and the scan accuracy of the mirror can be improved.

In the aforementioned structure of shifting the phases by the range from 1/(2gm) to 1/(2gn), the phase control synthesis portion is preferably configured to shift the phases of the first drive waveform signal and the second drive waveform signal by the range from 1/(2gm) to 1/(2gn) when setting the resonant frequency of the mirror to f, setting a frequency of (0.95 x f) to the gn, and setting a frequency of (1.05 x f) to the gm. According to this structure, the practical effect of offsetting the harmonic components can be reliably obtained when the first drive waveform signal and the second drive waveform signal are synthesized.

In the aforementioned structure of setting the frequency of (0.95 x f) to gn and setting the frequency of (1.05 x f) to gm, the phase control synthesis portion is preferably configured to shift the phases of the first drive waveform signal and the second drive waveform signal by about 1/(2f). According to this structure, the harmonic components can be effectively offset when the first drive waveform signal and the second drive waveform signal are synthesized.

In the aforementioned structure of shifting the phases by about 1/(2f), the phase control synthesis portion is preferably provided at a plurality of stages corresponding to a plurality of resonant frequencies of the mirror, a first-stage phase control synthesis portion preferably shifts the phases of a first-stage first drive waveform signal and a first-stage second drive waveform signal by about 1/(2f1) and synthesizes the first-stage first drive waveform signal and the first-stage second drive waveform signal when setting a first resonant frequency of the mirror to f1, a second-stage phase control synthesis portion preferably branches a drive waveform signal synthesized by the first-stage phase control synthesis portion, shifts the phases of a second-stage first drive waveform signal and a second-stage second drive waveform signal by about 1/(2f2), and synthesizes the second-stage first drive waveform signal and the second-stage second drive waveform signal when setting a second resonant frequency of the mirror to f2, and the mirror drive portion is preferably configured to drive the mirror with a drive waveform signal synthesized by the second-stage phase control synthesis portion. According to this structure, as to the harmonic component at the resonant frequency of the mirror notably generating unnecessary vibration of the mirror, the plurality of drive waveform signals are shifted in phase and are synthesized, whereby the harmonic components can be offset. Furthermore, even in the case where the mirror has the plurality of resonant frequencies, the phase control synthesis portions at the plurality of stages corresponding to the resonant frequencies of the mirror shift the phases of the plurality of drive waveform signals by about 1/(2f1) and about 1/(2f2) to offset the harmonic components and synthesize the plurality of drive waveform signals, whereby the harmonic component generating unnecessary vibration in the mirror is effectively reduced or vanished, and the scan accuracy of the mirror can be further improved.

Shifting the phases of the two drive waveform signals by about 1/(2f) as described above corresponds to setting a difference in phase between the two drive waveform signals to about 180 degrees at the resonant frequency f of the mirror. Thus, the two drive waveform signals are synthesized (added), whereby the harmonic components of the two drive waveform signals at the frequency f are offset in reversed phases, and hence the unnecessary vibration of the mirror can be effectively suppressed.

The present invention is applied also in the case where three or more drive waveform signals are shifted in phase relative to each other and are synthesized. In the case where three drive waveform signals are synthesized, for example, these three drive waveform signals may be shifted in phase relative to each other by about 120 degrees at an intended frequency, and in the case where four drive waveform signals are synthesized, these four drive waveform signals may be shifted in phase relative to each other by about 90 degrees at an intended frequency. In this manner, the harmonic components of the plurality of drive waveform signals may be offset by additive synthesis at the intended frequency.

In the aforementioned structure of shifting the phases by the range from 1/(2gm) to 1/(2gn), the phase control synthesis portion is preferably configured to synthesize the first drive waveform signal and the second drive waveform signal by addition. According to this structure, the gain level can be easily adjusted, and hence when the first drive waveform signal and the second drive waveform signal are synthesized, the harmonic components can be effectively offset.

In the aforementioned structure of shifting the phases by the range from 1/(2gm) to 1/(2gn), the phase control synthesis portion is preferably configured to adjust the period and duty ratio of the first drive waveform signal and the period and duty ratio of the second drive waveform signal, respectively, to be substantially equal to each other. According to this structure, when the first drive waveform signal and the second drive waveform signal are synthesized, generation of unintended vibration in the mirror resulting from different periods and duty ratios can be suppressed.

In the aforementioned structure of shifting the phases by the range from 1/(2gm) to 1/(2gn), the phase control synthesis portion is preferably configured to shift the phase of the second drive waveform signal relative to the phase of the first drive waveform signal and adjust the gain of the second drive waveform signal to be not more than the gain of the first drive waveform signal. According to this structure, even in the case where unintended deformation is generated in the second drive waveform signal when the second drive waveform signal is shifted in phase, the gain of the second drive waveform signal shifted in phase does not exceed the gain of the first drive waveform signal, whereby the great influence of the unintended deformation of the second drive waveform signal on the synthesized drive waveform signal can be suppressed.

The aforementioned image display device according to the first aspect preferably further includes a detecting portion detecting displacement of the mirror and a feedback control portion performing feedback control on processing of shifting phases to offset harmonic components and synthesizing signals performed by the phase control synthesis portion on the basis of the displacement of the mirror detected by the detecting portion. In the case where noise is superposed on a drive waveform signal due to disturbance resulting from an influence from another electronic device or the like, for example, this noise conceivably causes, as the harmonic component of the drive waveform signal, the unnecessary vibration of the mirror. Also in the case where there is variation in accuracy for each product, for example, this noise conceivably causes the unnecessary vibration of the mirror. On the other hand, the feedback control is performed on the processing of shifting the phases to offset the harmonic components and synthesizing the drive waveform signals input into the mirror drive portion on the basis of the actual displacement of the mirror (the displacement waveform of the mirror) detected by the detecting portion, as hereinabove described, whereby the unnecessary vibration of the mirror resulting from disturbance or the like can be reduced or vanished.

In this case, the feedback control portion is preferably configured to determine the amount of phase shift by the phase control synthesis portion such that a ratio of the amplitude of a drive waveform signal input into the mirror drive portion and the amplitude of the displacement of the mirror detected by the detecting portion is minimized. According to this structure, the amount of phase shift by the phase control synthesis portion can be set to an appropriate value, and hence the drive accuracy of the mirror driven by the drive waveform signal can be improved.

In the aforementioned structure of including the feedback control portion performing feedback control, the feedback control portion is preferably configured to determine a synthesis ratio of the gains of the plurality of drive waveform signals employed in the phase control synthesis portion on the basis of the amplitude ratio of the displacement of the mirror in the case where there is no phase shift and the displacement of the mirror in the case where there is a phase shift. Thus, the synthesis ratio of the gains of the plurality of drive waveform signals generated by the phase control synthesis portion can be set to an appropriate value, and hence the drive accuracy of the mirror driven by the drive waveform signal can be improved.

In the aforementioned image display device according to the first aspect, the mirror is preferably a MEMS (Micro Electro Mechanical System) scan mirror. According to this structure, the scan accuracy of the mirror can be improved in the MEMS scan mirror capable of being advantageously downsized, reduced in power consumption, increased in processing speed, etc.

In the aforementioned image display device according to the first aspect, the mirror drive portion is preferably configured to drive the mirror with the drive waveform signal at a fundamental frequency in the vicinity of the resonant frequency of the mirror. Thus, even in the case where the mirror is driven with the drive waveform signal at the fundamental frequency in the vicinity of the resonant frequency of the mirror, susceptible to the harmonic component, the plurality of drive waveform signals are shifted in phase to offset the harmonic components and are synthesized, whereby the harmonic component generating unnecessary vibration in the mirror is reduced or vanished, and the scan accuracy of the mirror can be improved.

In the aforementioned image display device according to the first aspect, the mirror drive portion is preferably configured to non-resonantly drive the mirror. Thus, even in the case where the mirror is influenced by the harmonic component associated with the resonant frequency of the mirror when the mirror is non-resonantly driven, the plurality of drive waveform signals are shifted in phase to offset the harmonic components thereof and are synthesized, whereby the harmonic component generating unnecessary vibration in the mirror is reduced or vanished, and the scan accuracy of the mirror can be improved.

A mirror drive method for an image display device according to a second aspect of the present invention is a mirror drive method for an image display device scanning light while reflecting the light by driving a mirror to display an image, including steps of shifting the phases of a plurality of drive waveform signals to offset harmonic components thereof, synthesizing a first drive waveform signal and a second drive waveform signal whose phases are shifted, and driving the mirror with a synthesized drive waveform signal.

As hereinabove described, the mirror drive method for an image display device according to the second aspect of the present invention includes the steps of shifting the phases of the plurality of drive waveform signals to offset the harmonic components thereof and synthesizing the first drive waveform signal and the second drive waveform signal whose phases are shifted, whereby a harmonic component generating unnecessary vibration in the mirror is reduced or vanished, and the scan accuracy of the mirror can be improved.

In the aforementioned mirror drive method for an image display device according to the second aspect, the step of shifting the phases preferably includes a step of shifting the phases of the first drive waveform signal and the second drive waveform signal by a range from 1/(2gm) to 1/(2gn) when setting a frequency lower by a prescribed level than the resonant frequency of the mirror to gn and setting a frequency higher by a prescribed level than the resonant frequency of the mirror to gm. According to this structure, the phases of the plurality of drive waveform signals can be shifted by the phase range (from 1/(2gm) to 1/(2gn)) at a frequency in a prescribed range (from gn to gm) with respect to the resonant frequency of the mirror, and hence a practical effect of offsetting the harmonic components can be obtained when the first drive waveform signal and the second drive waveform signal are synthesized.

In this case, the step of shifting the phases by the range from 1/(2gm) to 1/(2gn) preferably has a step of shifting the phases of a first-stage first drive waveform signal and a first-stage second drive waveform signal by a range from 1/(2gm1) to 1/(2gn1) when setting a frequency lower by a prescribed level than a first resonant frequency of the mirror to gn1 and setting a frequency higher by a prescribed level than the first resonant frequency to gm1 at a first stage, the step of synthesizing the signals preferably includes a step of synthesizing the first-stage first drive waveform signal and the first-stage second drive waveform signal whose phases are shifted, the step of shifting the phases by the range from 1/(2gm) to 1/(2gn) preferably further has a step of branching a drive waveform signal synthesized at the first stage and shifting the phases of a second-stage first drive waveform signal and a second-stage second drive waveform signal by a range from 1/(2gm2) to 1/(2gn2) when setting a frequency lower by a prescribed level than a second resonant frequency of the mirror to gn2 and setting a frequency higher by a prescribed level than the second resonant frequency to gm2 at a second stage, the step of synthesizing the signals preferably further includes a step of synthesizing the second-stage first drive waveform signal and the second-stage second drive waveform signal whose phases are shifted, and the step of driving the mirror preferably includes a step of driving the mirror with a drive waveform signal synthesized at the second stage. According to this structure, even in the case where the mirror has a plurality of resonant frequencies due to the structure, the material, or the like, phase control synthesis portions at a plurality of stages corresponding to the resonant frequencies of the mirror shift the phases of the plurality of drive waveform signals to offset the harmonic components thereof and synthesize the plurality of drive waveform signals, whereby the harmonic component generating unnecessary vibration in the mirror is reduced or vanished, and the scan accuracy of the mirror can be improved.

In the aforementioned structure of including the step of shifting the phases by the range from 1/(2gm) to 1/(2gn), the step of shifting the phases by the range from 1/(2gm) to 1/(2gn) preferably has a step of shifting the phases of the first drive waveform signal and the second drive waveform signal by about 1/(2f) when setting the resonant frequency of the mirror to f. According to this structure, the plurality of drive waveform signals are shifted in phase relative to each other by about 1/(2f), whereby the harmonic components can be effectively offset when the first drive waveform signal and the second drive waveform signal are synthesized.

An image display device according to a third aspect of the present invention is an image display device scanning light while reflecting the light by driving a mirror to display an image, including a mirror control portion shifting the phases of a plurality of drive waveform signals to offset harmonic components thereof and synthesizing the plurality of drive waveform signals and a mirror drive portion driving the mirror with a drive waveform signal synthesized by the phase control synthesis portion.

In the image display device according to the third aspect of the present invention, as hereinabove described, the plurality of drive waveform signals are shifted in phase to offset the harmonic components thereof and are synthesized, whereby a harmonic component generating unnecessary vibration in the mirror is reduced or vanished, and the scan accuracy of the mirror can be improved.

### Effect of the Invention

According to the present invention, the harmonic component generating unnecessary vibration in the mirror is reduced or vanished, and the scan accuracy of the mirror can be improved. Furthermore, improvement in the image quality of the image display device displaying the image with reflected light can be achieved. In addition, the harmonic component generating unnecessary vibration in the mirror is reduced or vanished, whereby the ratio of a blanking period (period for moving to a subsequent scanning section) is reduced, and a longer time can be allocated to projection, whereby a bright image can be displayed.

### Brief Description of the Drawings

[Fig. 1] A diagram showing a structure of a laser projector to which the present invention is applied.
[Fig. 2] An external perspective view of a scan mirror to which the present invention is applied.
[Fig. 3] A structural diagram of a main section according to a first embodiment of the present invention.
[Fig. 4] A diagram for illustrating processing according to the first embodiment of the present invention.
[Fig. 5] A diagram for illustrating the characteristics of the scan mirror.
[Fig. 6] A diagram for illustrating unnecessary vibration of a mirror resulting from a harmonic component of a drive waveform signal.
[Fig. 7] A diagram for illustrating an effect of the first embodiment of the present invention.
[Fig. 8] A structural diagram of a main section according to a second embodiment of the present invention.
[Fig. 9] A diagram for illustrating processing according to the second embodiment of the present invention.
[Fig. 10] A structural diagram of a main section according to a third embodiment of the present invention.
[Fig. 11] A diagram for illustrating processing according to the third embodiment of the present invention.
[Fig. 12] A structural diagram of a main section according to a fourth embodiment of the present invention.
[Fig. 13] A diagram for illustrating processing according to the fourth embodiment of the present invention.
[Fig. 14] A structural diagram of a main section according to a fifth embodiment of the present invention.

### Modes for Carrying Out the Invention

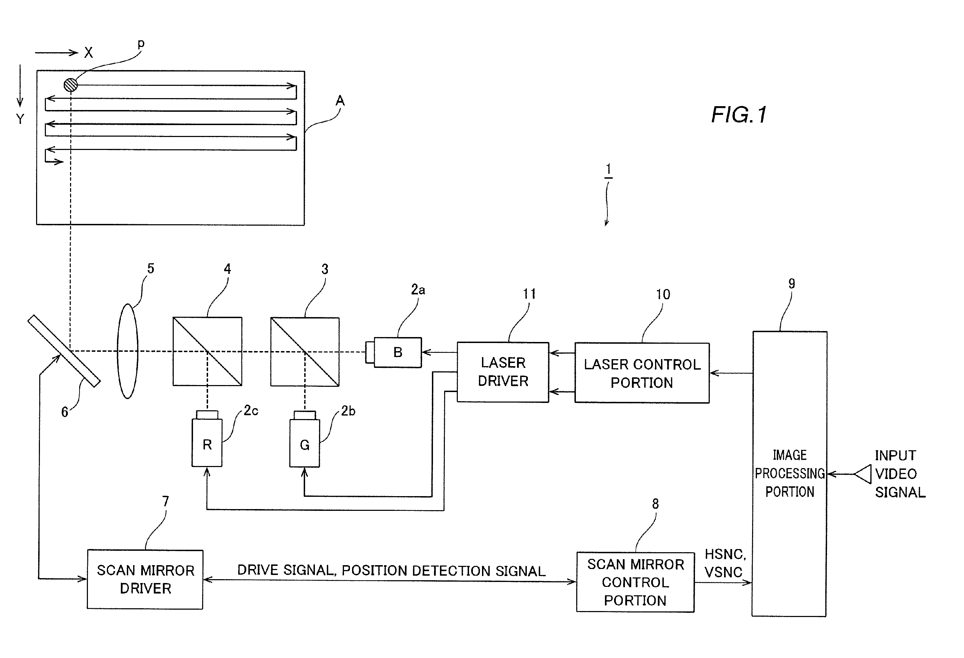

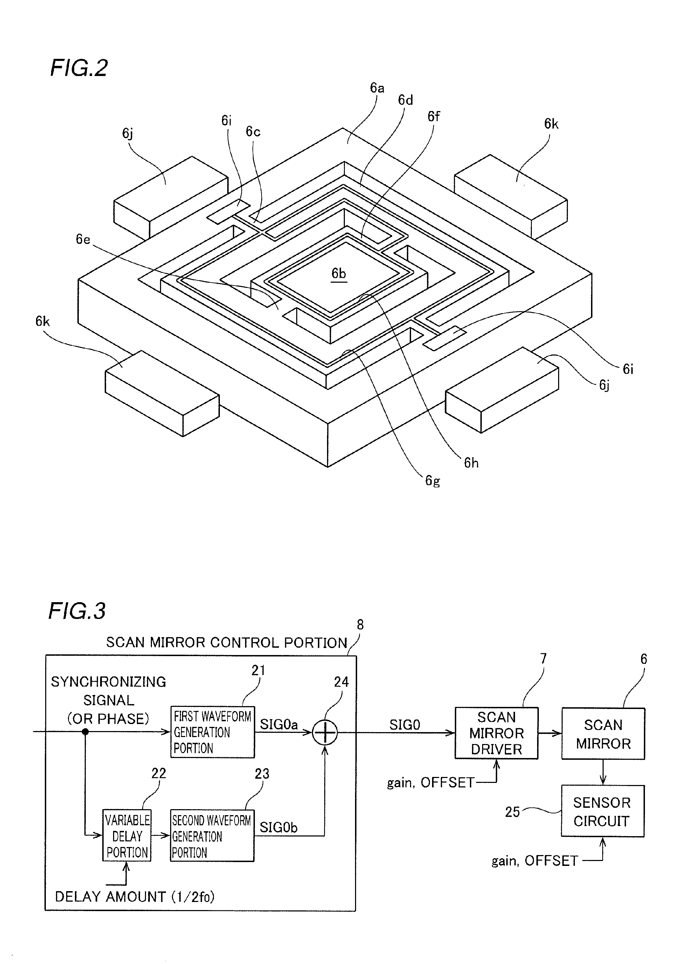

The present invention is applicable to various image display devices including a mirror driven (displaced for scanning) in accordance with a saw-tooth drive waveform signal, and as a specific example (first to fifth embodiments) to which the present invention is applied, a structural example of a laser projector including a MEMS (Micro Electro Mechanical System) scan mirror is described with reference to Figs. 1 and 2. The MEMS scan mirror is a device driving a mirror reflecting a light beam (laser beam here) in accordance with a saw-tooth drive waveform signal.

A laser projector 1 shown in Fig. 1 is mainly constituted by laser beam sources 2a to 2c, various optical elements 3 to 5, a scan mirror 6, and various drive/control units 7 to 11. The laser projector 1 displays a color image in accordance with a video signal on a projection surface A by synthesizing laser beams of red, blue, and green components and projecting the synthesized laser beams on the projection surface A such as a screen or a wall.

Specifically, a laser drive signal is generated in a laser control portion 10 on the basis of a signal from an image processing portion 9 processing the video signal. Drive currents supplied to the separate laser beam sources 2a to 2c are generated in a laser driver 11 on the basis of the laser drive signal. The laser beam sources 2a to 2c are driven independently of each other by the drive currents supplied individually from the laser driver 11. Thus, laser beams of specified wavelengths are emitted such that the blue component (B) is emitted from the laser beam source 2a, the green component (G) is emitted from the laser beam source 2b, and the red component (R) is emitted from the laser beam source 2c.

Dichroic mirrors 3 and 4 synthesize the laser beams of the color components emitted from the laser beam sources 2a to 2c by transmitting only laser beams of specified wavelengths and reflecting the others. Specifically, the laser beams of the blue component and the green component emitted from the laser beam sources 2a and 2b, respectively, are synthesized in the dichroic mirror 3 on the upstream side of an optical path and are emitted to the dichroic mirror 4 on the downstream side of the optical path. This emitted synthesized beam is further synthesized with the laser beam of the red component emitted from the laser beam source 2c in the dichroic mirror 4 and is emitted as a targeted final color beam. This emitted color beam is incident on the scan mirror 6 through a lens 5.

The scan mirror 6 has a function of reflecting the color beam incident on itself according to the deflection angle of itself and projecting the same on the projection surface A by being displaced for scanning (driven) by a scan mirror driver 7 into which a drive signal (drive waveform signal) is input from a scan mirror control portion 8. This scan mirror 6 has a two-dimensional degree of freedom corresponding to the horizontal direction X and the vertical direction Y of the projection surface A and forms an image on the projection surface A by performing line sequential scanning corresponding to the two-dimensional displacement. This line sequential scanning is continuously performed in one frame by advancing a laser spot p in one direction in a horizontal line on the projection surface A and returning the laser spot p in the opposite direction in a subsequent horizontal line located immediately below in a repetitive manner. The scan mirror 6 is an example of the "MEMS scan mirror" in the present invention, and the scan mirror driver 7 is an example of the "mirror drive portion" in the present invention.

According to first to fifth embodiments described below, processing of offsetting harmonic components of saw-tooth drive waveform signals input into the scan mirror driver 7 in order to allow the scan mirror 6 to perform scanning in the vertical direction is performed.

Fig. 2 shows the scan mirror 6, and a rectangular frame-shaped outer frame 6d is swingably mounted on the inside of a rectangular frame-shaped substrate 6a through an outer rotation shaft 6c. Furthermore, a rectangular inner frame 6f is swingably mounted on the inside of this outer frame 6d through an inner rotation shaft 6e, and a mirror 6b is provided in the center of this inner frame 6f.

The reflection direction of the mirror 6b mounted on the substrate 6a through the outer frame 6d and the inner frame 6f is unambiguously specified on the basis of the amount of rotation (deflection angle) of the inner frame 6f using the inner rotation shaft 6e as a shaft center and the amount of rotation (deflection angle) of the outer frame 6d using the outer rotation shaft 6c orthogonal to the inner rotation shaft 6e as a shaft center.

In the outer frame 6d, an outer coil 6g is arranged to surround the mirror 6b, and in the inner frame 6f, an inner coil 6h is arranged to surround the mirror 6b. These outer coil 6g and inner coil 6h are connected to a pair of electrodes 6i, respectively, in a state where the same are electrically separated from each other, and drive currents are supplied individually thereto from the scan mirror driver 7 through these electrodes 6i in accordance with the drive waveform signal.

Outside the substrate 6a, two sets of permanent magnet pairs 6j and 6k are arranged orthogonal to each other. One permanent magnet pair 6j is arranged in the axial direction of the outer rotation shaft 6c such that the north pole and the south pole are opposed to each other, and the other permanent magnet pair 6k is arranged in the axial direction of the inner rotation shaft 6e such that the north pole and the south pole are opposed to each other.

An operating principle in the case where the mirror 6b is electromagnetically driven to perform scanning is roughly as follows.

When a drive current for horizontal scanning is supplied to the electrodes 6i, the mirror 6b is oscillated about the inner rotation shaft 6e by electromagnetic force generated between the inner coil 6h in which this drive current flows and one permanent magnet pair 6j. In one horizontal scanning period corresponding to 1/2 of this oscillation period, the mirror 6b sequentially reflects the laser beams corresponding to one horizontal direction, emitted from the laser beam sources 2a to 2c over time, whereby an image corresponding to one horizontal line is projected and displayed on the projection surface A (horizontal scanning). When a drive current for vertical scanning is supplied to the electrodes 6i, on the other hand, the mirror 6b is oscillated about the outer rotation shaft 6c by electromagnetic force generated between the outer coil 6g in which this drive current flows and the other permanent magnet pair 6k. In one vertical scanning period corresponding to 1/2 of this oscillation period, reflection of the laser beams corresponding to one horizontal line is repeated the number of times corresponding to the number of horizontal lines to project and display one frame of images on the projection surface A (vertical scanning).

### (First Embodiment)

Fig. 3 shows the structure of a main section of a laser projector according to a first embodiment of the present invention, and this section basically corresponds to the scan mirror 6, the scan mirror driver 7, and the scan mirror control portion 8 shown in Fig. 1.

A scan mirror control portion 8 of a laser projector 1 according to the first embodiment includes a first waveform generation portion 21, a variable delay portion 22, a second waveform generation portion 23, and a synthesis portion 24. The first waveform generation portion 21 has a function of generating a saw-tooth drive waveform signal SIG0a for driving a scan mirror 6 for vertical scanning on the basis of a synchronizing signal defining one vertical scanning period (frame rate). The variable delay portion 22 has a function of providing the synchronizing signal with a prescribed delay. The second waveform generation portion 23 has a function of generating a saw-tooth drive waveform signal SIG0b for driving the scan mirror 6 for vertical scanning on the basis of the synchronizing signal delayed by the variable delay portion 22. The synthesis portion 24 has a function of synthesizing the drive waveform signal SIG0a and the drive waveform signal SIG0b and outputting a synthesized saw-tooth drive waveform signal SIG0 to a scan mirror driver 7.

According to the first embodiment, these first waveform generation portion 21, variable delay portion 22, second waveform generation portion 23, and synthesis portion 24 are provided in the scan mirror control portion 8. The scan mirror control portion 8 is an example of the "phase control synthesis portion" or the "mirror control portion" in the present invention.

The laser projector is provided with a sensor circuit 25 detecting displacement of the scan mirror 6.

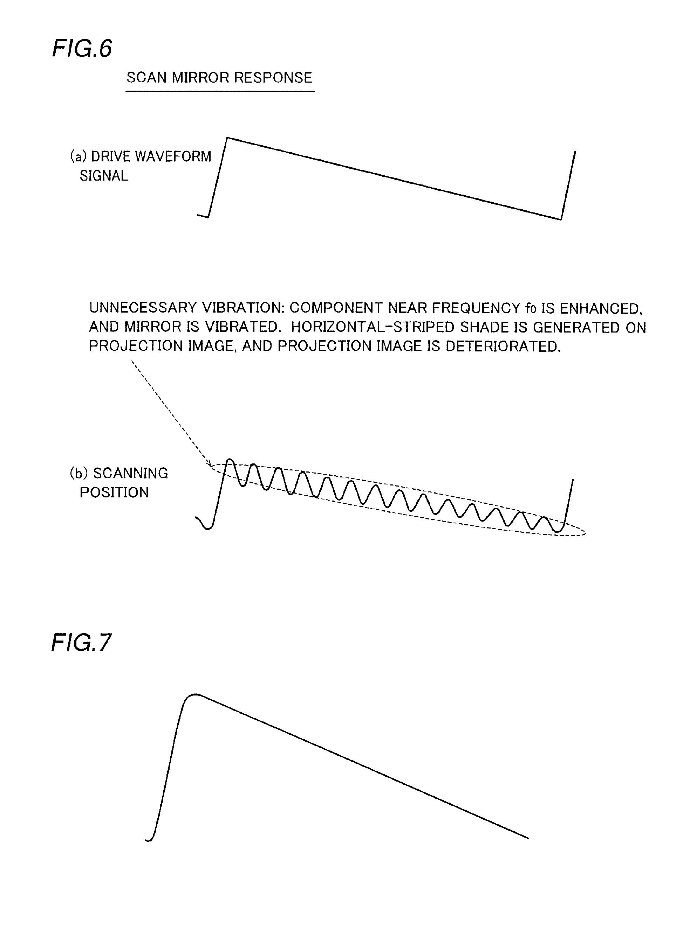

The scan mirror 6 scanning a laser beam in two axes is non-resonantly operated in the case of low-speed side scanning (vertical scanning direction). In the case of the low-speed side scanning, the scan mirror driver 7 drives the scan mirror 6 on the basis of a saw-tooth drive waveform signal shown in Fig. 6(a), and a mirror 6b is driven to be displaced in order to perform one back-and-forth scanning for one frame period of a displayed image.

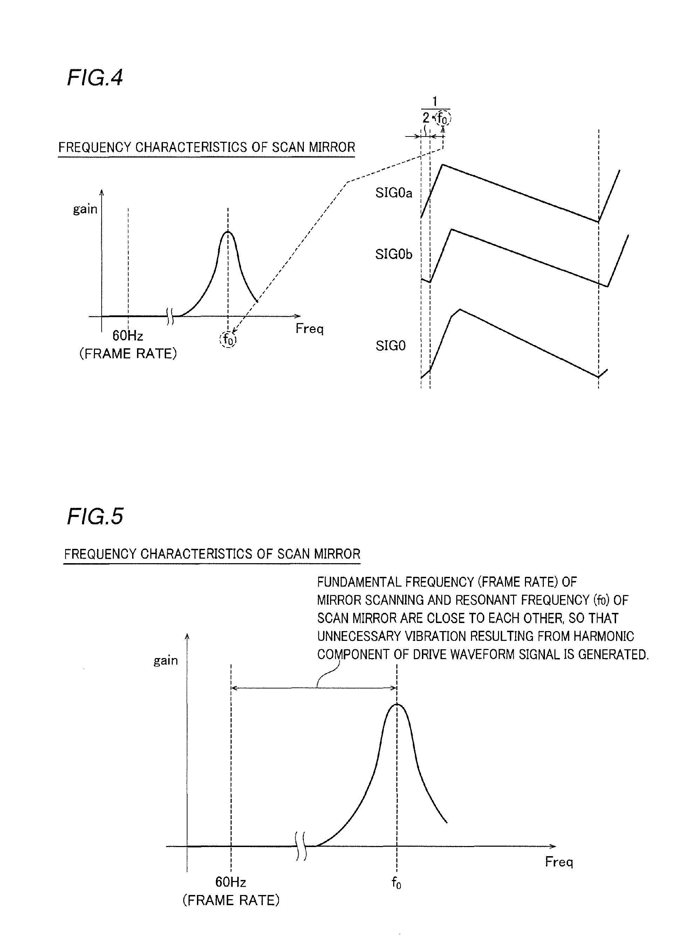

At this time, in the case of low-speed side scanning, the scan mirror 6 has such characteristics (resonant frequency f0) that the scan mirror 6 resonates near the fundamental frequency (frame rate: 60 Hz) of the drive waveform signal, as shown in Fig. 5. Therefore, even if a saw-tooth drive waveform signal indicating intended displacement of the mirror 6b is supplied to the scan mirror driver 7, the mirror 6b is fractionally vibrationally operated (unnecessarily vibrated) under the influence of the harmonic component of the drive waveform signal, as shown in Fig. 6(b). Thus, a horizontal-stripe blocky image is projected in the projection surface A, and hence there is such a problem that the image quality is deteriorated.

According to the first embodiment, the drive waveform signal SIG0b from the second waveform generation portion 23 is delayed as compared with the drive waveform signal SIG0a from the first waveform generation portion 21, and these drive waveform signal SIG0a and drive waveform signal SIG0b are shifted in phase to offset the harmonic components thereof and are synthesized, as shown in Fig. 4. Thus, the drive waveform signal SIG0 with which the scan mirror driver 7 allows the mirror 6b to perform vertical scanning is generated, whereby unnecessary vibration of the mirror 6b is suppressed. The drive waveform signals SIG0a and SIG0b are examples of the "first drive waveform signal" and the "second drive waveform signal" in the present invention, respectively.

Specifically, the saw-tooth drive waveform signal SIG0a is generated in the first waveform generation portion 21 on the basis of the input synchronizing signal (signal indicating one frame period). On the other hand, the input synchronizing signal is delayed by a phase of about 1/(2f0) on the basis of the input synchronizing signal and the resonant frequency f0 of the scan mirror 6 (mirror 6b) in the variable delay portion 22, unlike in the first waveform generation portion 21. In the second waveform generation portion 23, the saw-tooth drive waveform signal SIG0b delayed by a phase of about 1/(2f0) as compared with the drive waveform signal SIG0a is generated on the basis of the synchronizing signal delayed by the phase of about 1/(2f0). Thus, the drive waveform signal SIG0b in which the harmonic component is shifted in phase by about 180 degrees relative to that of the drive waveform signal SIG0a is generated.

Then, in the synthesis portion 24, these drive waveform signals SIG0a and SIG0b are synthesized, whereby the drive waveform signal SIG0 to be input into the scan mirror driver 7 is generated and is input into the scan mirror driver 7. Thus, the harmonic component of the drive waveform signal SIG0 obtained by synthesizing the drive waveform signal SIG0a and the drive waveform signal SIG0b in which the harmonic component is shifted in phase by about 180 degrees relative to that of the drive waveform signal SIG0a, which generates unnecessary vibration in the mirror 6b, can be theoretically removed, and the mirror 6b can be displaced for vertical scanning without unnecessary vibration, as shown in Fig. 7.

The period and duty ratio (duty) of the drive waveform signal SIG0a and the period and duty ratio of the drive waveform signal SIG0b, respectively, are substantially the same, and the gain is preferably gain (SIG0a) ≥ gain (SIGOb). Alternatively, the drive waveform signals SIG0a and SIG0b may be synthesized by additive synthesis taking an average in order to adjust the gain level.

According to the first embodiment, as hereinabove described, the drive waveform signal SIG0b from the second waveform generation portion 23 is delayed as compared with the drive waveform signal SIG0a from the first waveform generation portion 21, and these drive waveform signal SIG0a and drive waveform signal SIG0b are shifted in phase to offset the harmonic components thereof and are synthesized. Thus, the harmonic component generating unnecessary vibration in the scan mirror 6 is reduced or vanished, and the scan accuracy of the scan mirror 6 can be improved. Furthermore, the ratio of a blanking period (period for moving to a subsequent scanning section) is reduced, and a longer time can be allocated to projection, whereby a bright image can be displayed.

According to the first embodiment, as hereinabove described, in the second waveform generation portion 23, the saw-tooth drive waveform signal SIG0b delayed by the phase of about 1/(2f0) as compared with the drive waveform signal SIG0a is generated on the basis of the synchronizing signal delayed by the phase of about 1/(2f0). Thus, when the drive waveform signals SIG0a and SIG0b are synthesized, the harmonic components can be effectively offset.

According to the first embodiment, the drive waveform signals SIG0a and SIG0b are synthesized by additive synthesis, whereby the gain level can be easily adjusted, and hence when the drive waveform signals SIG0a and SIG0b are synthesized, the harmonic components can be effectively offset.

According to the first embodiment, the period and duty ratio of the drive waveform signal SIG0a and the period and duty ratio of the drive waveform signal SIG0b, respectively, are substantially the same, whereby when the drive waveform signals SIG0a and SIG0b are synthesized, generation of unintended vibration in the scan mirror 6 resulting from different periods and duty ratios can be suppressed.

According to the first embodiment, the gain satisfies gain (SIG0a) ≥ gain (SIGOb). Thus, even in the case where unintended deformation is generated in the drive waveform signal SIG0b when the drive waveform signal SIG0b is shifted in phase, the gain of the drive waveform signal SIG0b shifted in phase does not exceed the gain of the drive waveform signal SIG0a, whereby the great influence of the unintended deformation of the drive waveform signal SIG0b shifted in phase on the synthesized drive waveform signal SIG0 can be suppressed.

According to the first embodiment, the scan mirror 6 is a MEMS scan mirror, whereby the scan accuracy of the scan mirror 6 can be improved in the MEMS scan mirror capable of being advantageously downsized, reduced in power consumption, increased in processing speed, etc.

According to the first embodiment, the scan mirror 6 has such characteristics that the scan mirror 6 resonates near the fundamental frequency (frame rate: 60 Hz) of the drive waveform signal. Thus, even in the case where the scan mirror 6 is susceptible to the harmonic component, the drive waveform signal SIG0a and the drive waveform signal SIG0b are shifted in phase to offset the harmonic components thereof and are synthesized, whereby the harmonic component generating unnecessary vibration in the scan mirror 6 is reduced or vanished, and the scan accuracy of the scan mirror 6 can be improved.

According to the first embodiment, even in the case where the scan mirror 6 is influenced by the harmonic component associated with the resonant frequency f0 of the scan mirror 6 when the scan mirror 6 is non-resonantly driven, the drive waveform signal SIG0a and the drive waveform signal SIG0b are shifted in phase to offset the harmonic components thereof and are synthesized, whereby the harmonic component generating unnecessary vibration in the scan mirror 6 is reduced or vanished, and the scan accuracy of the scan mirror 6 can be improved.

### (Second Embodiment)

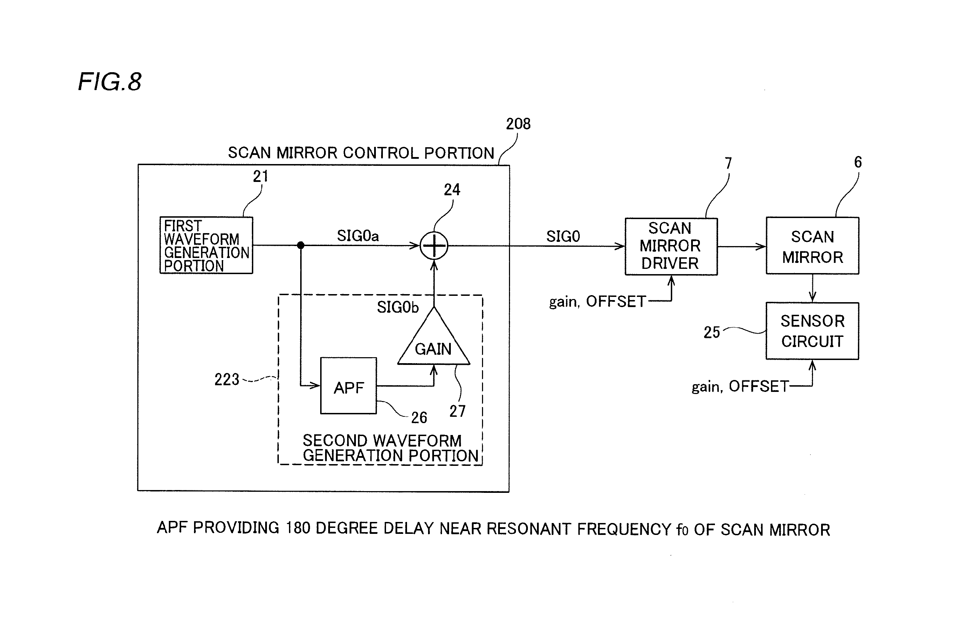

Fig. 8 shows the structure of a main section of a laser projector according to a second embodiment of the present invention. The second embodiment is different from the aforementioned first embodiment in a method for generating a drive waveform signal SIG0b. The second embodiment is described while the same reference numerals are assigned to the same portions as those of the aforementioned first embodiment in the figures, and duplicate descriptions are omitted.

According to the second embodiment, a second waveform generation portion 223 of a scan mirror control portion 208 is constituted by an all-pass filter (APF) 26 and a gain adjuster (GAIN) 27, as shown in Fig. 8. A drive waveform signal SIG0a generated in a first waveform generation portion 21 is branched and is delayed in the second waveform generation portion 223, whereby the drive waveform signal SIG0b is generated. The scan mirror control portion 208 is an example of the "phase control synthesis portion" or the "mirror control portion" in the present invention.

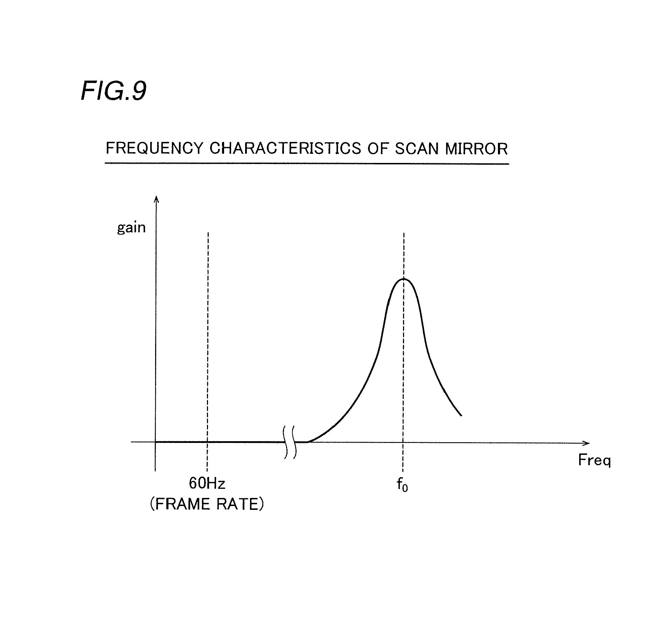

In other words, when the resonant frequency of a scan mirror 6 (mirror 6b) is f0, as shown in Fig. 9, an APF 26 of the second waveform generation portion 223 shifts the phase of the drive waveform signal SIG0a by about 180 degrees with a component at the resonant frequency f0, whereby the drive waveform signal SIG0b whose phase is reversed with the component at the resonant frequency f0 relative to the drive waveform signal SIG0a is generated.

Therefore, these drive waveform signals SIG0a and SIG0b are synthesized in a synthesis portion 24, whereby a drive waveform signal SIG0 in which harmonic components generating unnecessary vibration in a mirror 6b are offset can be generated, similarly to the aforementioned first embodiment, and a scan mirror driver 7 can drive the scan mirror 6 for scanning with this drive waveform signal SIG0 to displace the mirror 6b for vertical scanning without unnecessary vibration.

The GAIN 27 adjusts the gain of the drive waveform SIG0a such that gain (SIG0a) ≥ gain (SIG0b). The remaining structure of the second embodiment is similar to that of the aforementioned first embodiment.

According to the second embodiment, as hereinabove described, the APF 26 of the second waveform generation portion 223 shifts the phase of the drive waveform signal SIG0a by about 180 degrees with the component at the resonant frequency f0, whereby the drive waveform signal SIG0b whose phase is reverted with the component at the resonant frequency f0 relative to the drive waveform signal SIG0a is generated, and the drive waveform signals SIG0a and SIG0b are synthesized in the synthesis portion 24. Thus, the harmonic component generating unnecessary vibration in the scan mirror 6 is reduced or vanished, and the scan accuracy of the scan mirror 6 can be improved. The remaining effects of the second embodiment are similar to those of the aforementioned first embodiment.

### (Third Embodiment)

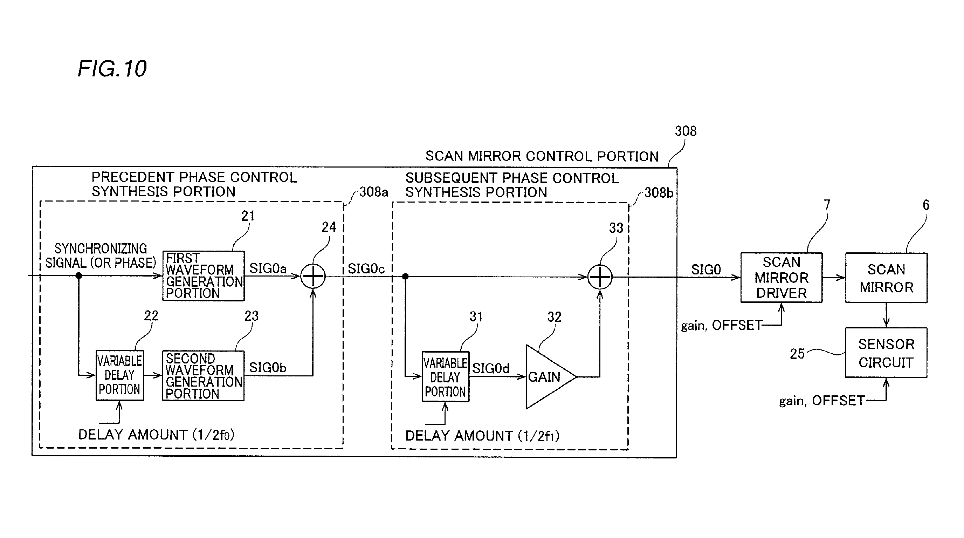

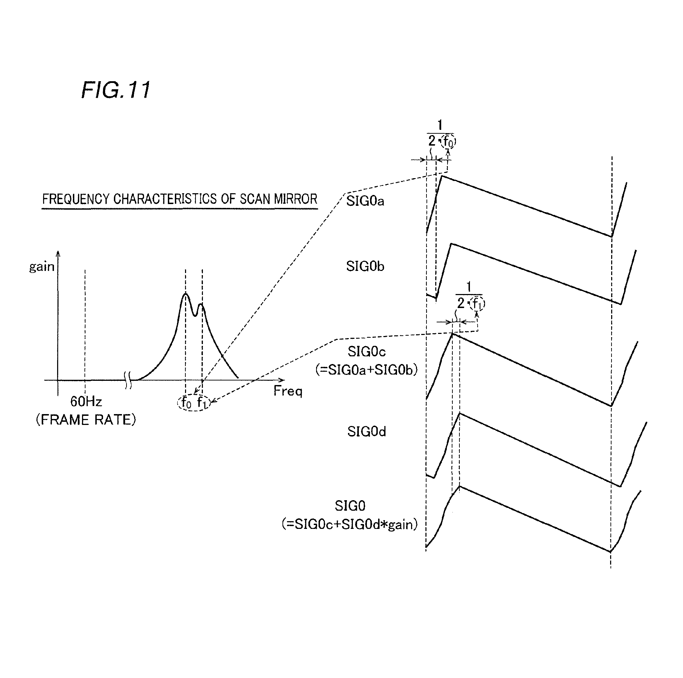

Fig. 10 shows the structure of a main section of a laser projector according to a third embodiment of the present invention. The third embodiment is applied when a scan mirror 6 (mirror 6b) has two resonant frequencies f0 and f1, as shown in Fig. 11, and in addition to the phase control synthesis portion (the first waveform generation portion 21, the variable delay portion 22, the second waveform generation portion 23, and the synthesis portion 24) shown in the aforementioned first embodiment, a subsequent phase control synthesis portion 308b is provided, whereby phase control synthesis portions are arranged in series at two stages. The third embodiment is described while the same reference numerals are assigned to the same portions as those of the aforementioned first embodiment in the figures, and duplicate descriptions are omitted.

A scan mirror control portion 308 inclines a precedent phase control synthesis portion 308a and the subsequent phase control synthesis portion 308b, and the precedent phase control synthesis portion 308a and the subsequent phase control synthesis portion 308b are arranged in series at the two stages. The precedent phase control synthesis portion 308a includes a first waveform generation portion 21, a variable delay portion 22, a second waveform generation portion 23, and a synthesis portion 24. The scan mirror control portion 308 is an example of the "phase control synthesis portion" or the "mirror control portion" in the present invention. The precedent phase control synthesis portion 308a and the subsequent phase control synthesis portion 308b are examples of the "first-stage phase control synthesis portion" and the "second-stage phase control synthesis portion" in the present invention, respectively.

In the precedent phase control synthesis portion 308a, drive waveform signals SIG0a and SIG0b are shifted in phase relative to each other by about 1/(2f0) and are synthesized, as shown in Fig. 11, similarly to the aforementioned first embodiment, whereby a drive waveform signal SIG0c in which harmonic components are offset at the resonant frequency f0 of the scan mirror 6 (mirror 6b) is generated. The drive waveform signals SIG0a and SIG0b are examples of the "first-stage first drive waveform signal" and the "first-stage second drive waveform signal" in the present invention, respectively. The resonant frequency f0 is an example of the "first resonant frequency" in the present invention.

The subsequent phase control synthesis portion 308b includes a variable amount delay portion 31, a gain adjuster (GAIN) 32, and a synthesis portion 33. In the subsequent phase control synthesis portion 308b, the drive waveform signal SIG0c is branched, and one drive waveform signal SIG0c is shifted in phase by about 1/(2f1) in the variable amount delay portion 31, whereby a drive waveform signal SIG0d is generated, as shown in Fig. 11. Furthermore, necessary gain adjustment is performed on the drive waveform signal SIG0d in the GAIN 32, and this drive waveform signal SIG0d is synthesized with the drive waveform signal SIG0c in the synthesis portion 33, whereby a drive waveform signal SIG0 in which harmonic components are offset not only at the resonant frequency f0 of the scan mirror 6 but also at a resonant frequency f1 of the scan mirror 6 is generated. The generated drive waveform signal SIG0 is input into a scan mirror driver 7. The drive waveform signals SIG0c and SIG0d are examples of the "second-stage first drive waveform signal" and the "second-stage second drive waveform signal" in the present invention, respectively. The resonant frequency f1 is an example of the "second resonant frequency" in the present invention.

Therefore, the scan mirror 6 is driven for scanning by the drive waveform signal SIG0 in which the harmonic components are offset at the two resonant frequencies f0 and f1, and hence the mirror 6b can be displaced for vertical scanning without unnecessary vibration.

In the case where there are three or more resonant frequencies of the scan mirror (mirror) or there are three or more frequencies at which unnecessary vibration is to be suppressed, for example, phase control synthesis portions arranged in series may be at three or more stages. The remaining structure of the third embodiment is similar to that of the aforementioned first embodiment.

According to the third embodiment, as hereinabove described, the drive waveform signal SIG0c in which the harmonic components are offset at the resonant frequency f0 of the scan mirror 6 is generated by shifting the phases of the drive waveform signals SIG0a and SIG0b from each other by about 1/(2f0) and synthesizing the drive waveform signals SIG0a and SIG0b. Furthermore, the drive waveform signal SIG0 in which the harmonic components are offset at the resonant frequency f1 of the scan mirror 6 is generated by shifting the phase of the drive waveform signal SIG0c by about 1/(2f1) in the variable amount delay portion 31 to generate the drive waveform signal SIG0d and synthesizing the drive waveform signal SIG0d with the drive waveform signal SIG0c in the synthesis portion 33. Thus, the precedent phase control synthesis portion 8a and the subsequent phase control synthesis portion 8b corresponding to the resonant frequencies f0 and f1 of the scan mirror 6, respectively, shift the phases of the plurality of drive waveform signals by about 1/(2f0) and about 1/(2f1) to offset the harmonic components thereof and synthesize the plurality of drive waveform signals, whereby the harmonic component generating unnecessary vibration in the scan mirror 6 is effectively reduced or vanished, and the scan accuracy of the scan mirror 6 can be further improved. The remaining effects of the third embodiment are similar to those of the aforementioned first embodiment.

### (Fourth Embodiment)

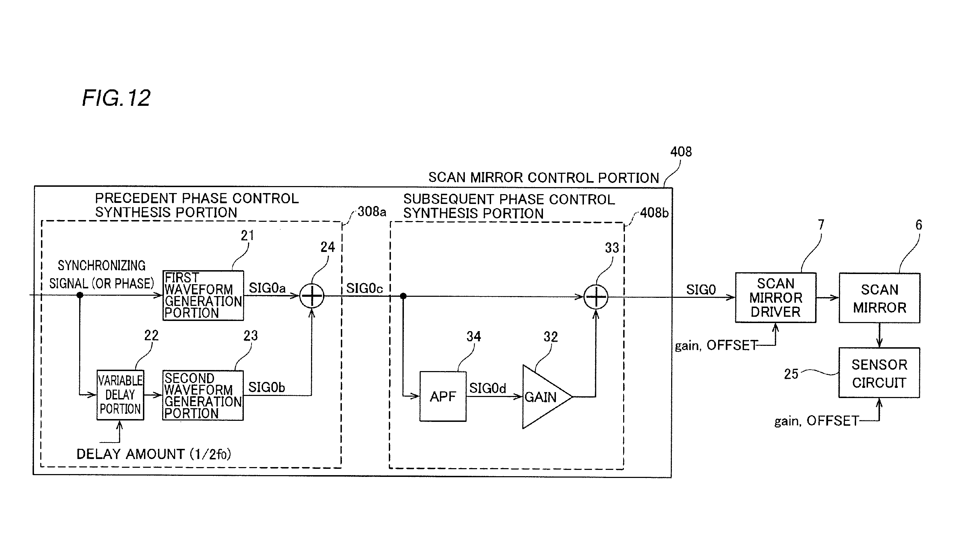

Fig. 12 shows the structure of a main section of a laser projector according to a fourth embodiment of the present invention. The fourth embodiment is applied in the case where a scan mirror 6 (mirror 6b) has two resonant frequencies f0 and f1 but is different from the aforementioned third embodiment in a method for generating a drive waveform signal SIG0d. The fourth embodiment is described while the same reference numerals are assigned to the same portions as those of the aforementioned third embodiment in the figures, and duplicate descriptions are omitted.

A subsequent phase control synthesis portion 408b of a scan mirror control portion 408 includes an all-pass filter (APF) 34, a gain adjuster (GAIN) 32, and a synthesis portion 33. In the subsequent phase control synthesis portion 408b, a drive waveform signal SIG0c generated in a precedent phase control synthesis portion 308a is branched and is delayed in the APF 34, whereby the drive waveform signal SIG0d is generated. Specifically, the APF 34 of the subsequent phase control synthesis portion 408b shifts the phase of the drive waveform signal SIG0c by about 180 degrees with a component at a resonant frequency f1, whereby a drive waveform signal SIG0d whose phase is reversed with the component at the resonant frequency f1 relative to the drive waveform signal SIG0c is generated. The scan mirror control portion 408 is an example of the "phase control synthesis portion" or the "mirror control portion" in the present invention, and the subsequent phase control synthesis portion 408b is an example of the "second-stage phase control synthesis portion" in the present invention.

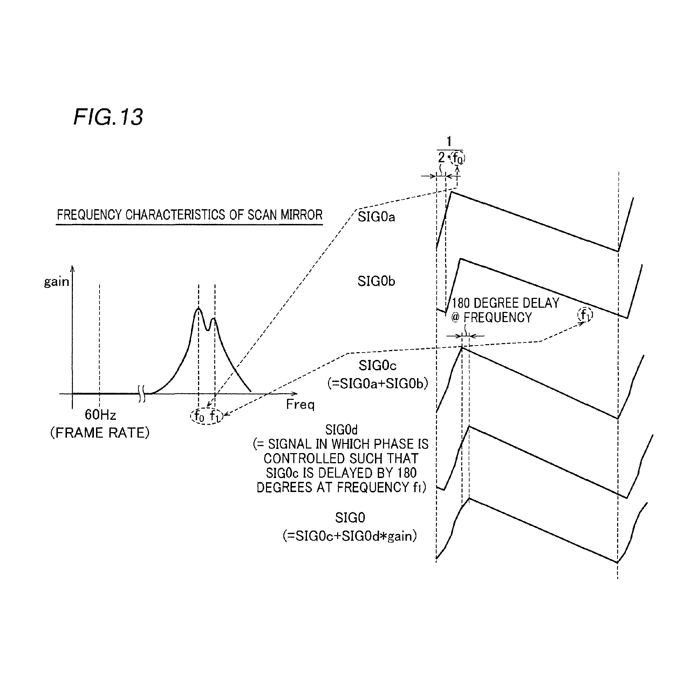

In other words, in the case where the resonant frequency of the scan mirror 6 (mirror 6b) is f0 and f1, as shown in Fig. 13, the drive waveform signal SIG0c in which a harmonic component is offset at the resonant frequency f0 is generated in the precedent phase control synthesis portion 308a, the drive waveform signal SIG0d in which a harmonic component is offset at the resonant frequency f1 is generated from the drive waveform signal SIG0c in the subsequent phase control synthesis portion 408b, and a drive waveform signal SIG0 input into a scan mirror driver 7 is generated. The remaining structure and effects of the fourth embodiment are similar to those of the aforementioned third embodiment.

### (Fifth Embodiment)

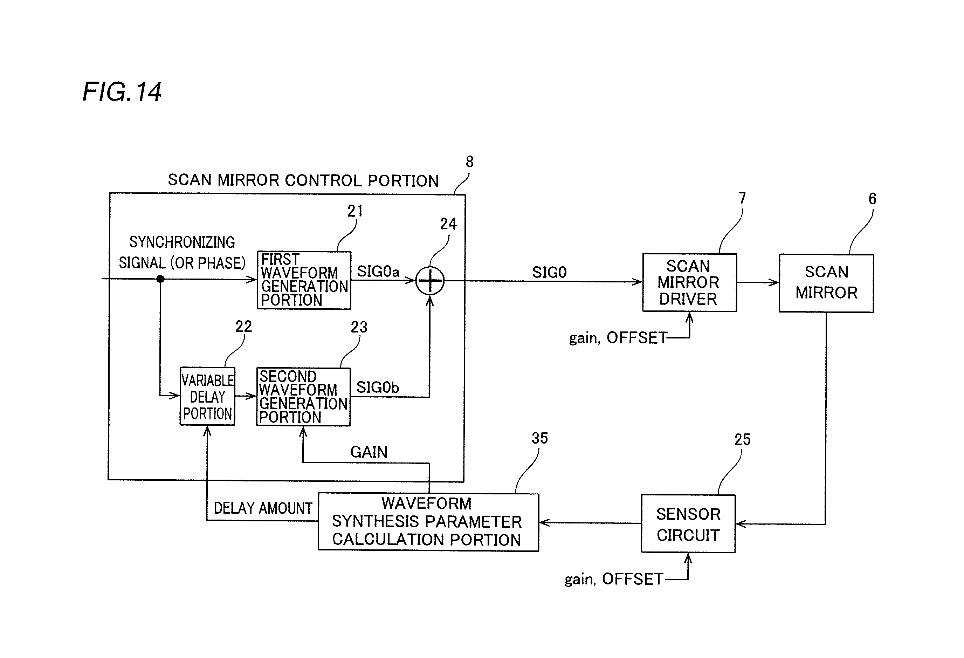

Fig. 14 shows the structure of a main section of a laser projector according to a fifth embodiment of the present invention. According to the fifth embodiment, processing of shifting the phases of the drive waveform signals to offset the harmonic components thereof and synthesizing the drive waveform signals, performed by the phase control synthesis portion (the first waveform generation portion 21, the variable delay portion 22, the second waveform generation portion 23, and the synthesis portion 24) shown in the aforementioned first embodiment is feedback controlled on the basis of actual displacement for scanning of a mirror 6b. The fifth embodiment is described while the same reference numerals are assigned to the same portions as those of the aforementioned first embodiment in the figures, and duplicate descriptions are omitted.

The fifth embodiment is obtained by adding a waveform synthesis parameter calculation portion 35 configured to effectively suppress unnecessary vibration by suitably setting parameters for phase control synthesis processing on the basis of displacement of the mirror 6b detected in a sensor circuit 25 even under a condition where there is characteristics fluctuation or characteristics variation of a scan mirror 6 or under a condition where noise is superposed on a drive waveform signal to the aforementioned first embodiment. The sensor circuit 25 is an example of the "detecting portion" in the present invention, and the waveform synthesis parameter calculation portion 35 is an example of the "feedback control portion" in the present invention.

According to the fifth embodiment, a drive waveform signal SIG0 input into a scan mirror driver 7 is generated, similarly to the aforementioned first embodiment, but parameters such as a delay amount input into a variable delay portion 22 and a gain input into a second waveform generation portion 23 are calculated by the waveform synthesis parameter calculation portion 35 on the basis of the displacement for scanning of the mirror 6b detected in the sensor circuit 25, whereby feedback control is performed by the waveform synthesis parameter calculation portion 35. In other words, the delay amount (phase shift amount) of the delay portion 22 and the output gain of the second waveform generation portion 23 are determined such that the amplitude of unnecessary vibration obtained from the sensor circuit 25 is reduced (harmonic components are offset).

In order to perform the aforementioned feedback control, the following Step A and Step B are performed in a process for starting the laser projector, and in order to respond to characteristics fluctuation after the start of the scan mirror 6, the delay amount of the variable delay portion 22 is updated in response to a change of the resonant frequency of the scan mirror 6 (mirror 6b).

The Step A is a step of changing a phase delay amount provided for a drive waveform signal SIG0b and estimating the resonant frequency f of the scan mirror 6.

The waveform synthesis parameter calculation portion 35 searches a point at which a ratio of the amplitude of a displacement signal of the mirror 6b detected in the sensor circuit 25 to the amplitude of the drive waveform signal SIG0 supplied to the scan mirror driver 7 is minimized, whereby the resonant frequency f of the scan mirror 6 can be specified, and a phase delay set amount or a phase adjustment set amount (phase shift amount) provided for the drive waveform signal SIG0b is determined by the variable delay portion 22.

The Step B is a step of determining the gain of the drive waveform signal SIG0b in the second waveform generation portion 23 or a synthesis ratio of the gains of drive waveform signals SIG0a and SIG0b according to the amplitude ratio of the mirror displacement signal detected in the sensor circuit 25 in the case where the waveform synthesis parameter calculation portion 35 sets a difference in phase between the drive waveform signal SIG0a and the drive waveform signal SIG0b according to the resonant frequency f and in the case where the waveform synthesis parameter calculation portion 35 does not set the difference in phase.

MEMS mirror characteristics for each device can be obtained through these Step A and Step B without performing a sine sweep or the like particularly. The parameters (the delay amount and the gain) are set on the basis of those, whereby vibration of the mirror can be prevented following pullback of the scan mirror while a drawing period is kept high.

Needless to say, the aforementioned feedback control according to the fifth embodiment may be applied to the aforementioned second to fourth embodiments.

According to the fifth embodiment, as hereinabove described, the drive waveform signal SIG0b from the second waveform generation portion 23 is delayed as compared with the drive waveform signal SIG0a from the first waveform generation portion 21, and these drive waveform signal SIG0a and drive waveform signal SIG0b are shifted in phase to offset the harmonic components thereof and are synthesized. Thus, the harmonic component generating unnecessary vibration in the scan mirror 6 is reduced or vanished, and the scan accuracy of the scan mirror 6 can be improved.

According to the fifth embodiment, the waveform synthesis parameter calculation portion 35 configured to effectively suppress unnecessary vibration by suitably setting the parameters for the phase control synthesis processing on the basis of the displacement of the mirror 6b detected in the sensor circuit 25 is provided, whereby unnecessary vibration of the scan mirror 6 resulting from disturbance or the like can be reduced or vanished.

According to the fifth embodiment, The waveform synthesis parameter calculation portion 35 searches the point at which the ratio of the amplitude of the displacement signal of the mirror 6b detected in the sensor circuit 25 to the amplitude of the drive waveform signal SIG0 supplied to the scan mirror driver 7 is minimized to determine the phase delay set amount or the phase adjustment set amount (phase shift amount) provided for the drive waveform signal SIG0b by the variable delay portion 22. Thus, the phase delay set amount or the phase adjustment set amount (phase shift amount) provided for the drive waveform signal SIG0b by the variable delay portion 22 is determined. Thus, the amount of phase shift by the scan mirror control portion 8 can be set to an appropriate value, and hence the drive accuracy of the scan mirror 6 driven by the drive waveform signal SIG0 can be improved.

According to the fifth embodiment, the waveform synthesis parameter calculation portion 35 determines the gain of the drive waveform signal SIG0b in the second waveform generation portion 23 or the synthesis ratio of the drive waveform signal SIG0a and the drive waveform signal SIG0b according to the amplitude ratio of the mirror displacement signal detected in the sensor circuit 25 in the case where the difference in phase between the drive waveform signal SIG0a and the drive waveform signal SIG0b is set according to the resonant frequency f and in the case where the difference in phase is not set. Thus, the synthesis ratio of the gains of the drive waveform signals SIG0a and SIG0b employed in the scan mirror control portion 8 can be set to an appropriate value, and hence the drive accuracy of the mirror driven by the drive waveform signal SIG0 can be improved. The remaining effects of the fifth embodiment are similar to those of the aforementioned first embodiment.

The embodiments disclosed this time must be considered as illustrative in all points and not restrictive. The range of the present invention is shown not by the above description of the embodiments but by the scope of claims for patent, and all modifications within the meaning and range equivalent to the scope of claims for patent are further included.

While the processing of shifting the phases of the first drive waveform signal and the second drive waveform signal by about 1/(2f) and synthesizing the first drive waveform signal and the second drive waveform signal when setting the resonant frequency of the scan mirror (mirror) to f has been shown in each of the aforementioned first and fifth embodiments, the present invention is not restricted to this. According to the present invention, the first drive waveform signal and the second drive waveform signal may be shifted in phase and be synthesized by a frequency ranging to some extent with respect to the resonant frequency f of the scan mirror. In other words, according to the present invention, the first drive waveform signal and the second drive waveform signal may be shifted in phase by a range from 1/(2gm) to 1/(2gn) and be synthesized when setting a frequency lower by a prescribed level than the resonant frequency of the scan mirror to gn and setting a frequency higher by a prescribed level than the resonant frequency of the scan mirror to gm. Thus, unnecessary vibration of the mirror can be suppressed practically satisfactorily. Specifically, it has been confirmed by the following experiment that the unnecessary vibration of the mirror can be conceivably suppressed practically satisfactorily if the first drive waveform signal and the second drive waveform signal are shifted in phase by a frequency shifted by not more than 5% from the resonant frequency and are synthesized.

### <Conditions of Experiment>

- Frame rate: 50 Hz
- Resonant frequency of scan mirror (mirror): There are three resonant points of f0 = 600 Hz, f1 = 670 Hz, and f2 = 1800 Hz.
- The phases of four drive waveform signals were controlled, and the four drive waveform signals were synthesized to drive the scan mirror.
- Phase shift was ideally set (to 1/(2f1) and 1/(2f2)) for f1 and f2 and was set within a range separated by a prescribed amount from the vicinity of 1/(2f0) for f0.

### <Results of Experiment>

When the phases were shifted with a frequency shifted by 5% (error 5%) from f0, a displayed image looked substantially the same as the frequency was set ideally (to 1/(2f0)).

When the phases were shifted with a frequency shifted by 10% (error 10%) from f0, the displayed image looked slightly blocky.

When the phases were shifted with a frequency shifted by 15% (error 15%) from f0, the displayed image looked clearly blocky.

When the phases were shifted with a frequency shifted by 20% (error 20%) from f0, the displayed image looked clearly blocky.

Therefore, it has been confirmable from this experiment that the unnecessary vibration of the mirror can be suppressed such that a practically satisfactory image can be obtained also in the case where phase control synthesis is performed with the frequency if the frequency is within a range (a range from (0.95 x f) to (1.05 x f)) shifted by 5% from the resonant frequency of the scan mirror (mirror).

While the example of performing phase control synthesis at the two stages by shifting the phases of the first drive waveform signal and the second drive waveform signal by about 1/(2f0) and about 1/(2f1) and synthesizing the first drive waveform signal and the second drive waveform signal when setting the resonant frequency of the scan mirror to f0 and f1 has been shown in the aforementioned third embodiment, the present invention is not restricted to this. According to the present invention, the first drive waveform signal and the second drive waveform signal may be shifted in phase by a frequency ranging to some extent with respect to the resonant frequencies f0 and f1 of the scan mirror.

In other words, according to the present invention, in the first-stage phase control synthesis portion, the first-stage first drive waveform signal and the first-stage second drive waveform signal may be shifted in phase by a range from 1/(2gm1) to 1/(2gn1) and be synthesized when setting a frequency lower by a prescribed level than the first resonant frequency f0 of the scan mirror (mirror) to gn1 and setting a frequency higher by a prescribed level than the first resonant frequency f0 to gm1, and in the second-stage phase control synthesis portion, the second-stage first drive waveform signal and the second-stage second drive waveform signal may be shifted in phase by a range from 1/(2gm2) to 1/(2gn2) and be synthesized when setting a frequency lower by a prescribed level than the second resonant frequency f1 of the scan mirror (mirror) to gn2 and setting a frequency higher by a prescribed level than the second resonant frequency f1 to gm2. Thus, the unnecessary vibration of the mirror can be suppressed practically satisfactorily. From the aforementioned results of the experiment, the drive waveform signals are conceivably preferably shifted in phase by frequencies shifted by not more than 5% from the resonant frequencies f0 and f1.

While the phases of the drive waveform signal SIG0a and the drive waveform signal SIG0b are differentiated by providing the delay by the variable delay portion 22 provided on the side of the second waveform generation portion 23 in the aforementioned first embodiment, the present invention is not restricted to this. According to the present invention, a method such as whether either of the drive waveform signals is provided with phase shift or both of the drive waveform signals are provided with phase shift is arbitrarily selected.

Devices such as the phase control synthesis portion, the mirror drive portion, and the detecting portion constituting the present invention can have a circuit configuration employing an electronic component and also can be configured as a functional module employing computer hardware and software and so configured that the computer hardware executes the software.

While the example of offsetting the harmonic component of the drive waveform signal for driving the mirror for single vertical scanning at the frame rate of about 60 Hz has been shown in the aforementioned first embodiment, the present invention is not restricted to this. According to the present invention, the frame rate of the drive waveform signal for vertical scanning driving is not restricted to about 60 Hz. The structure of the present invention is preferably applied to a drive waveform signal for driving the mirror for single vertical scanning at a frame rate of about 50 Hz to about 60 Hz. Furthermore, the structure of the present invention may be applied to a drive waveform signal for driving the mirror for horizontal scanning depending on a scan rate, the resonant frequency of the scan mirror, etc.

While the example in which the scan mirror 6 is the MEMS scan mirror has been shown in the aforementioned first embodiment, the present invention is not restricted to this. According to the present invention, scan mirror devices in various forms can be employed so far as the same are driven for scanning as mirrors by a drive waveform signal. Reference Numerals
1: laser projector (image display device)
6: scan mirror (MEMS scan mirror)
6a: mirror
7: scan mirror driver (mirror drive portion)
8, 208, 308, 408: scan mirror control portion (phase control synthesis portion, mirror control portion)
21: first waveform generation portion
22: variable delay portion
23, 223: second waveform generation portion
24, 33: synthesis portion
25: sensor circuit (detecting portion)
26, 34: APF
35: waveform synthesis parameter calculation portion (feedback control portion)
308a: precedent phase control synthesis portion (first-stage phase control synthesis portion)
308b, 408b: subsequent phase control synthesis portion (second-stage phase control synthesis portion)

## Claims

1. An image display device (1) scanning light while reflecting the light by driving a mirror (6b) to display an image, comprising:
a phase control synthesis portion (8) shifting phases of a plurality of drive waveform signals to offset harmonic components thereof and synthesizing the plurality of drive waveform signals; and
a mirror drive portion (7) driving the mirror with a drive waveform signal synthesized by the phase control synthesis portion.

2. The image display device according to claim 1, wherein
the phase control synthesis portion is configured to shift phases of a first drive waveform signal and a second drive waveform signal by a range from 1/(2gm) to 1/(2gn) when setting a frequency lower by a prescribed level than a resonant frequency of the mirror to gn and setting a frequency higher by a prescribed level than the resonant frequency of the mirror to gm.

3. The image display device according to claim 2, wherein
the phase control synthesis portion is provided at a plurality of stages corresponding to a plurality of resonant frequencies of the mirror,
a first-stage phase control synthesis portion (308a) shifts phases of a first-stage first drive waveform signal and a first-stage second drive waveform signal by a range from 1/(2gm1) to 1/(2gn1) and synthesizes the first-stage first drive waveform signal and the first-stage second drive waveform signal when setting a frequency lower by a prescribed level than a first resonant frequency of the mirror to gn1 and setting a frequency higher by a prescribed level than the first resonant frequency to gm1,
a second-stage phase control synthesis portion (308b) branches a drive waveform signal synthesized by the first-stage phase control synthesis portion, shifts phases of a second-stage first drive waveform signal and a second-stage second drive waveform signal by a range from 1/(2gm2) to 1/(2gn2), and synthesizes the second-stage first drive waveform signal and the second-stage second drive waveform signal when setting a frequency lower by a prescribed level than a second resonant frequency of the mirror to gn2 and setting a frequency higher by a prescribed level than the second resonant frequency to gm2, and
the mirror drive portion is configured to drive the mirror with a drive waveform signal synthesized by the second-stage phase control synthesis portion.

4. The image display device according to claim 2, wherein
the phase control synthesis portion is configured to shift the phases of the first drive waveform signal and the second drive waveform signal by the range from 1/(2gm) to 1/(2gn) when setting the resonant frequency of the mirror to f, setting a frequency of (0.95 x f) to the gn, and setting a frequency of (1.05 x f) to the gm.

5. The image display device according to claim 4, wherein
the phase control synthesis portion is configured to shift the phases of the first drive waveform signal and the second drive waveform signal by about 1/(2f).

6. The image display device according to claim 5, wherein
the phase control synthesis portion is provided at a plurality of stages corresponding to a plurality of resonant frequencies of the mirror,
a first-stage phase control synthesis portion shifts phases of a first-stage first drive waveform signal and a first-stage second drive waveform signal by about 1/(2f1) and synthesizes the first-stage first drive waveform signal and the first-stage second drive waveform signal when setting a first resonant frequency of the mirror to f1,
a second-stage phase control synthesis portion branches a drive waveform signal synthesized by the first-stage phase control synthesis portion, shifts phases of a second-stage first drive waveform signal and a second-stage second drive waveform signal by about 1/(2f2), and synthesizes the second-stage first drive waveform signal and the second-stage second drive waveform signal when setting a second resonant frequency of the mirror to f2, and
the mirror drive portion is configured to drive the mirror with a drive waveform signal synthesized by the second-stage phase control synthesis portion.

7. The image display device according to claim 2, wherein
the phase control synthesis portion is configured to synthesize the first drive waveform signal and the second drive waveform signal by addition.

8. The image display device according to claim 2, wherein
the phase control synthesis portion is configured to adjust a period and a duty ratio of the first drive waveform signal and a period and a duty ratio of the second drive waveform signal, respectively, to be substantially equal to each other.

9. The image display device according to claim 2, wherein
the phase control synthesis portion is configured to shift the phase of the second drive waveform signal relative to the phase of the first drive waveform signal and adjust a gain of the second drive waveform signal to be not more than a gain of the first drive waveform signal.

10. The image display device according to claim 1, further comprising:
a detecting portion (25) detecting displacement of the mirror; and
a feedback control portion (35) performing feedback control on processing of shifting phases to offset harmonic components and synthesizing signals performed by the phase control synthesis portion on the basis of the displacement of the mirror detected by the detecting portion.

11. The image display device according to claim 10, wherein
the feedback control portion is configured to determine an amount of phase shift by the phase control synthesis portion such that a ratio of an amplitude of a drive waveform signal input into the mirror drive portion and an amplitude of the displacement of the mirror detected by the detecting portion is minimized.

12. The image display device according to claim 10, wherein
the feedback control portion is configured to determine a synthesis ratio of gains of the plurality of drive waveform signals employed in the phase control synthesis portion on the basis of an amplitude ratio of the displacement of the mirror in a case where there is no phase shift and the displacement of the mirror in a case where there is a phase shift.

13. The image display device according to claim 1, wherein
the mirror is a MEMS scan mirror.

14. The image display device according to claim 1, wherein
the mirror drive portion is configured to drive the mirror with the drive waveform signal at a fundamental frequency in a vicinity of a resonant frequency of the mirror.

15. The image display device according to claim 1, wherein
the mirror drive portion is configured to non-resonantly drive the mirror.

16. A mirror drive method for an image display device (1) scanning light while reflecting the light by driving a mirror (6b) to display an image, comprising steps of:
shifting phases of a plurality of drive waveform signals to offset harmonic components thereof;
synthesizing a first drive waveform signal and a second drive waveform signal whose phases are shifted; and
driving the mirror with a synthesized drive waveform signal.

17. The mirror drive method for an image display device according to claim 16, wherein
the step of shifting the phases includes a step of shifting phases of the first drive waveform signal and the second drive waveform signal by a range from 1/(2gm) to 1/(2gn) when setting a frequency lower by a prescribed level than a resonant frequency of the mirror to gn and setting a frequency higher by a prescribed level than the resonant frequency of the mirror to gm.

18. The mirror drive method for an image display device according to claim 17, wherein
the step of shifting the phases by the range from 1/(2gm) to 1/(2gn) has a step of shifting phases of a first-stage first drive waveform signal and a first-stage second drive waveform signal by a range from 1/(2gm1) to 1/(2gn1) when setting a frequency lower by a prescribed level than a first resonant frequency of the mirror to gn1 and setting a frequency higher by a prescribed level than the first resonant frequency to gm1 at a first stage,
the step of synthesizing the signals includes a step of synthesizing the first-stage first drive waveform signal and the first-stage second drive waveform signal whose phases are shifted,
the step of shifting the phases by the range from 1/(2gm) to 1/(2gn) further has a step of branching a drive waveform signal synthesized at the first stage and shifting phases of a second-stage first drive waveform signal and a second-stage second drive waveform signal by a range from 1/(2gm2) to 1/(2gn2) when setting a frequency lower by a prescribed level than a second resonant frequency of the mirror to gn2 and setting a frequency higher by a prescribed level than the second resonant frequency to gm2 at a second stage,
the step of synthesizing the signals further includes a step of synthesizing the second-stage first drive waveform signal and the second-stage second drive waveform signal whose phases are shifted, and
the step of driving the mirror includes a step of driving the mirror with a drive waveform signal synthesized at the second stage.

19. The mirror drive method for an image display device according to claim 17, wherein
the step of shifting the phases by the range from 1/(2gm) to 1/(2gn) has a step of shifting the phases of the first drive waveform signal and the second drive waveform signal by about 1/(2f) when setting the resonant frequency of the mirror to f.

20. An image display device (1) scanning light while reflecting the light by driving a mirror (6b) to display an image, comprising:
a mirror control portion (8) shifting phases of a plurality of drive waveform signals to offset harmonic components thereof and synthesizing the plurality of drive waveform signals; and
a mirror drive portion (7) driving the mirror with a drive waveform signal synthesized by the phase control synthesis portion.
